# FASCICULE DE BREVET EUROPEEN

(11) **EP 1 250 686 B1**
(45) Date de publication et mention de la délivrance du brevet: **15.09.2004**
(21) Numéro de dépôt: 01903943.7
(22) Date de dépôt: 12.01.2001
(51) Int. Cl.: G07F 7/10

(54) **PROC D DE PROTECTION CONTRE LE VOL DU CODE SECRET DANS LES CARTES PUCE(S) MULTI-APPLICATIONS ET CARTES PUCE(S) METTANT EN OEUVRE LE PROC D**
VERFAHREN ZUM SCHUTZ GEGEN DEN DIEBSTAHL EINES GEHEIMKODES AUF EINER CHIPKARTE FUR MEHRFACHANWENDUNGEN, UND CHIPKARTEN ZUR DURCHFÜHRUNG DIESES VERFAHRENS
METHOD FOR PROTECTING AGAINST THEFT OF A PIN NUMBER IN (A) MULTI-APPLICATION SMART CARD(S) AND CHIP CARD(S) IMPLEMENTING SAID METHOD

(30) Priorité: 14.01.2000 FR 0000488
(43) Date de publication de la demande: 23.10.2002
(73) Titulaire: GEMPLUS, 13420 Gemenos Cedex (FR)
(72) Inventeur: BIDAN, Christophe, F-35235 Thorigne-Fouillard (FR); GIRARD, Pierre, F-13600 La Ciotat (FR)
(86) Numéro de dépôt international: PCT/FR2001/000110
(87) Numéro de publication internationale: WO 2001/052201

(56) Documents cités:
- EP-A- 0 696 016
- US-A- 4 879 645
- US-A- 4 983 816
- PATENT ABSTRACTS OF JAPAN vol. 1998, no. 08, 30 juin 1998 (1998-06-30) & JP 10 069435 A (DAINIPPON PRINTING CO LTD), 10 mars 1998 (1998-03-10)

## Description

L'invention concerne un procédé de protection contre le vol du code secret dans les cartes à puce(s) multi applications. Elle concerne également les cartes à puce(s) mettant en oeuvre ledit procédé.

On entend par cartes à puce(s) multi-applications des cartes contenant une ou plusieurs puces de circuit intégré lesdites cartes étant destinées à pouvoir exécuter différents programmes d'application chargés ou téléchargés au cours de la vie de la carte.

Parmi les solutions de cartes multi-applications existantes à ce jour, nous pouvons signaler « JavaCard » défini/spécifié par Sun ou « SmartCard for Windows » défini/spécifié par Microsoft.

Pour simplifier, on parlera dans la suite d'applications pour désigner les programmes d'applications (ou Applet en terminologie anglo saxonne).

On entend par code secret le numéro d'identification personnel du titulaire de la carte que l'on dénomme également PIN (Personnal Identifier Number).

Pour des raisons de compatibilité avec les cartes à puce(s) ne supportant qu'une unique application, et de simplicité pour l'utilisateur de la carte, les cartes à puce(s) multi-applications ont généralement un seul PIN global pour toutes les applications. Ainsi, la spécification OP définie par VISA, et qui tient lieu actuellement de standard pour le chargement/téléchargement et la gestion interne d'applications sur les cartes à puce(s) multi-applications, définit un unique code secret pour toutes les applications résidentes et futures de la carte.

Le problème soulevé par le déposant dans le cas d'une carte multi-applications, vient de ce que la carte est prévue pour pouvoir charger ou télécharger de nouvelles applications pendant toute sa vie. A priori ceci est un avantage, mais en pratique cette caractéristique rend la carte vulnérable, car des applications malveillantes pourront être chargées avec d'autres applications de manière transparente vis à vis du titulaire. C'est donc une porte ouverte à de telles applications qui bien sûr en pratique vont chercher à découvrir le code secret de la carte.

Suite à cette observation, le déposant a identifié une attaque permettant de trouver le PIN de la carte :

Cette attaque suppose l'existence d'une application malveillante qui ne possède pas d'accès vers un terminal de transaction avec la carte c'est à dire non prévue pour dialoguer vers l'extérieur.

Une application ne possède pas d'accès vers un terminal dès lors qu'il n'existe pas de terminaux mettant en oeuvre un protocole permettant de directement dialoguer avec cette application. De telles applications peuvent néanmoins s'exécuter au sein de la carte, car elles proposent/fournissent des services aux autres applications de la carte. On peut citer par exemple les applications de fidélité (« loyalties application ») qui sont des applications prévues pour comptabiliser des points de fidélité.

Voici alors la procédure suivie lors de cette attaque au moyen d'une application qui ne peut pas dialoguer avec l'extérieur.

En fait l'application exploite l'interface logique offerte par le système d'exploitation (ou par une application dédiée) et permettant de vérifier le code secret. Ainsi pour VOP, l'implémentation OP pour « JavaCard », cette interface est l'opération « verify PIN ».

Une application pouvant dialoguer avec l'extérieur et désirant vérifier l'identité du porteur commence par demander à l'utilisateur d'entrer son code secret par affichage d'un message sur l'écran du terminal dans lequel est insérée la carte à puce. Ensuite, l'application utilise l'interface fournie par le système d'exploitation (ou par l'application dédiée afin de vérifier que la valeur entrée par l'utilisateur est identique à la valeur du code secret de la carte). Si telle est le cas, le système d'exploitation (ou l'application en charge de la vérification du code) répond par l'affirmation ; par la négation dans le cas contraire.

Dans la mesure où l'interface de vérification de code secret est accessible à l'ensemble des applications de la carte, une application malveillante peut déclencher l'exécution de cette opération et faire tester ainsi différentes valeurs jusqu'à l'obtention d'une réponse positive signalant que le code secret présenté est valide.

Une application malveillante peut donc faire appel à l'opération de vérification de code secret (verify PIN pour VOP) et ainsi essayer différentes valeurs pour le code (O, 01, 02, 03, ... 9999).

Pour éviter que ne soit testées un trop grand nombre de valeurs, la carte dispose généralement d'un compteur de ratification qui bloque son fonctionnement au bout d'un nombre déterminé de codes incorrects. En pratique ce nombre est généralement de 3.

Il est donc possible pour une application malveillante de présenter successivement deux valeurs de code (ou plus généralement, n-1 si le nombre de codes incorrects provocant le blocage de la carte est n), si les deux fois le code est mauvais, c'est-à-dire la réponse de la vérification du code secret est négative, le compteur de ratification sera incrémenté de 2, l'application étant bien évidemment prévue pour arrêter les tests et attendre que ce compteur soit réinitialisé par une entrée du code correct par l'utilisateur.

En effet, le déclenchement par l'utilisateur d'une application dialoguant avec l'extérieur met en oeuvre la procédure de vérification du code secret comme cela a été précédemment décrit. Le code secret est demandé à l'utilisateur, qui le rentre à partir du clavier du terminal. La procédure de vérification est mise en oeuvre, et si l'utilisateur ne s'est pas trompé, le compteur de ratification qui était à 2 du fait des essais de l'application malveillante est remis à zéro. Ainsi, l'application malveillante peut recommencer des essais.

Dans la littérature brevets, deux documents s'approchent de ladite invention. Il s'agit des documents :
- D1 : US 4 879 645 de Oazaki Hiroshi, novembre 1999 ;
- D2 : US 4 983 816 de Iijima Yasuo, novembre 1991.

Le document D1 concerne un dispositif de traitements de données garantissant une grande sécurité des programmes stockés. Plus spécifiquement, ce document s'applique à la protection des programmes stockés dans le microprocesseur d'une carte à puce. Ce document cherche essentiellement à prévenir des actions malveillantes de la part de l'utilisateur, attaque décrite dans le texte, qui chercherait à découvrir un algorithme secret stocké dans la carte. En effet, l'utilisateur possède le code secret de la carte et peut donc faire fonctionner des programmes sensibles des millions de fois sans bloquer la carte et découvrir ainsi les algorithmes secrets de certains programmes. Ce document propose de limiter le nombre d'appel successif à un programme spécifique (dont l'algorithme doit rester secret), en limitant le nombre d'appel possible, en allongeant 1e temps de réponse, en interdisant le fonctionnement continu du programme par exemple.

Le document D2 concerne une carte à puce comportant plusieurs codes d'identification (PIN), au moins deux codes partageant le même indicateur. Lorsqu'un code erroné est saisi, un compteur est incrémenté. Un système de double compteurs est proposé, un remis à zéro par une juste saisie du code ou par une coupure d'alimentation et un autre jamais remis à zéro. Aucune mention n'est faite dans ce document d'une carte à puce comportant des moyens de détection d'opérations de vérification du code secret par une application ne possédant pas d'accès vers l'extérieur.

Cependant aucun de ces deux documents ne mentionne le fonctionnement d'une application sans accès vers

l'extérieur de la carte en vue de la découverte du code secret de ladite carte.

La présente invention a pour but de remédier à ces problèmes.

La présente invention a pour objet un procédé de protection contre le vol du code secret pour cartes à puce(s) multi applications, principalement caractérisé en ce qu'il consiste à détecter des opérations de vérification du code secret par une ou des applications ne possédant pas d'accès vers l'extérieur de la carte et à bloquer le fonctionnement de ladite carte ou de la ou desdites applications lorsque le nombre d'opération détectées a atteint une valeur de seuil prédéterminée.

Selon une caractéristique de l'invention, la détection d'opérations de vérification du code secret comprend le déclenchement d'un compteur de ratification pour le comptage d'essais infructueux de code secret.

Selon l'invention, le procédé consiste à utiliser deux compteurs de ratification, un premier compteur pour comptabiliser les essais infructueux ledit compteur étant remis à zéro lorsque le titulaire présente un code secret correct avant d'avoir atteint un nombre maximal prédéterminé de présentations possibles, le fonctionnement de la carte étant bloqué dans le cas contraire, et en ce qu'il consiste à incrémenter un deuxième compteur à chaque fois que le premier compteur s'approche de la valeur maximale et à bloquer le fonctionnement de la carte ou de l'application lorsque la valeur de ce deuxième compteur atteint la valeur de seuil prédéterminée.

Selon un autre mode de réalisation, le procédé consiste à utiliser un compteur de ratification par application, chaque compteur étant apte à comptabiliser les essais infructueux de code secret relatifs à chaque application susceptible d'être mise en oeuvre par la carte, le blocage du fonctionnement de la carte étant provoqué dés que l'un des compteurs a atteint une valeur de seuil prédéterminée pour le dit compteur.

L'invention a également pour objet une carte à puce multi applications, principalement caractérisée en ce qu'elle comporte des moyens de détection d'opérations de vérification du code secret par une application ne possédant pas d'accès vers l'extérieur et des moyens de blocage de son fonctionnement lorsque le nombre d'opération de vérification a atteint une valeur de seuil prédéterminée.

Les moyens de détection d'opérations de vérification du code secret comprennent au moins deux compteurs de ratification pour le comptage d'essais infructueux de code secret.

Les moyens de comptage comportent deux compteurs de ratification, un premier compteur pour comptabiliser les essais infructueux ledit compteur étant remis à zéro lorsque le titulaire présente un code secret correct avant d'avoir atteint un nombre maximal prédéterminé de présentations possibles, le fonctionnement de la carte étant bloqué dans le cas contraire, et un deuxième compteur incrémenté à chaque fois que le premier compteur s'approche de la valeur maximale et qui est utilisé par les moyens de blocage pour bloquer le fonctionnement de la carte lorsque la valeur de ce compteur atteint une valeur maximale prédéterminée.

Selon un autre mode de réalisation les moyens de comptage de ratification comportent un compteur pour chaque application, chaque compteur étant apte à comptabiliser les essais infructueux de code secret relatifs à chaque application susceptible d'être mise en oeuvre par la carte, le blocage du fonctionnement de la carte ou de l'application étant provoqué dés que l'un des compteurs a atteint une valeur de seuil prédéterminée pour le dit compteur.

D'autres particularités et avantages de l'invention apparaîtront clairement à la lecture de la description qui est faite ci après et en regard des dessins sur lesquels :
- la figure 1 représente le schéma fonctionnel d'une carte à puce multi applications,
- la figure 2 représente le schéma fonctionnel
- d'un premier mode de réalisation,
- la figure 3 représente le schéma fonctionnel d'un deuxième mode de réalisation.

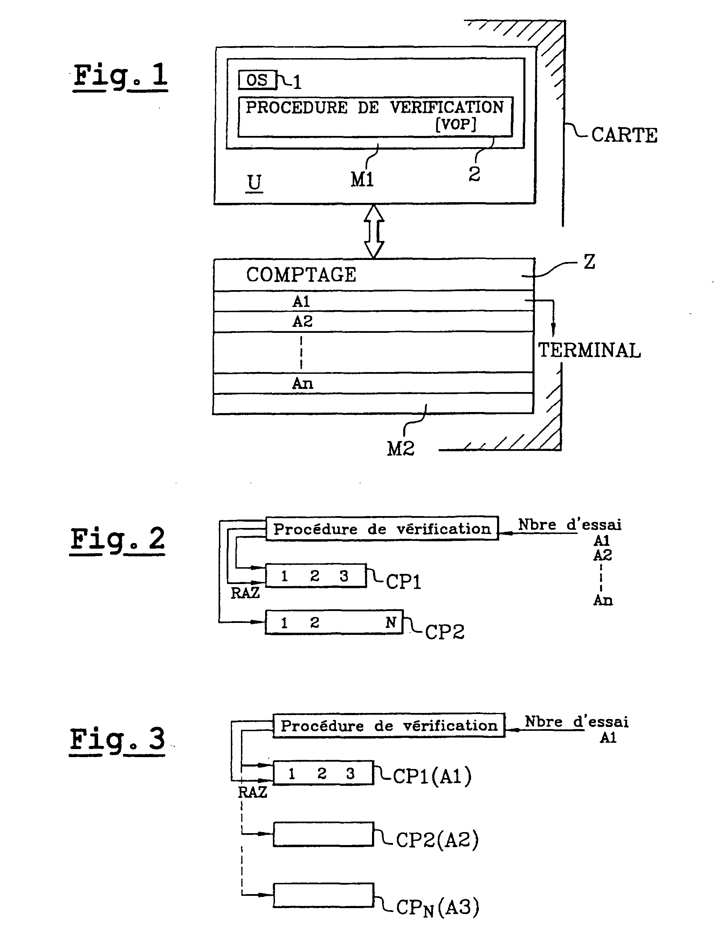

Une carte à puce multi applications a été schématisée sur la figure 1 afin d'illustrer les différents éléments entrant dans la mise en oeuvre du procédé conforme à l'invention.

Une première solution proposée selon le procédé, consiste à utiliser deux compteurs de ratification, un premier pour compter toutes les mauvaises compositions du code secret quelle que soit l'application, ledit compteur étant remis à zéro lors d'une présentation correcte du code secret avant d'avoir atteint un nombre maximal prédéterminé de présentations possibles, le fonctionnement de la carte étant bloqué dans le cas contraire, le second compteur pour comptabiliser le nombre de fois que le premier compteur dépasse la valeur d'un seuil prédéterminé, ledit compteur n'étant pas remis à zéro après présentation d'un code correct.

Une deuxième solution consiste à utiliser deux compteurs de ratification par application A1, A2,.., An.

Pour mieux comprendre l'invention on rappelle qu'une carte à puce possède une unité de traitement U munie d'une mémoire de programme dans laquelle se trouve le système d'exploitation de la carte ainsi que des application pouvant étendre les fonctionnalités fournies par le système d'exploitation en proposant des services aux autres applications par l'intermédiaire de leur interface, par exemple une application dédiée à la vérification du code secret.

Les différents programmes d'application A1, A2, An, peuvent se trouver dans cette même mémoire de programme M1 ou dans une autre mémoire de programme M2 qui sera alors prévue à cet effet de manière à pouvoir charger de nouvelles applications pendant la vie de la carte. Dans ce cas la mémoire sera une mémoire électriquement effaçable (du type EEPROM).

Une zone Z pour le comptage d'essais infructueux pourra être prévue dans cette mémoire M2.

Selon un premier mode de réalisation illustré par la figure 2, la détection d'essais infructueux opérés par une application n'ayant pas d'accès vers l'extérieur est effectuée au moyen de deux compteurs CP1 et CP2.

A l'issue de la vérification opérée par la procédure de vérification lancée par une quelconque des applications, et en présence d'un code secret mauvais, le compteur CP1 est incrémenté. Ainsi, lorsqu'il s'agit d'une application qui ne possède pas d'accès vers l'extérieur, le code secret fourni pour vérification ne peut provenir que de cette application qui cherche à faire des essais pour découvrir le code secret.

Dans le cas d'applications ayant un accès vers l'extérieur, le code servant à la vérification du code secret est demandé par l'application au titulaire de la carte. A priori le titulaire d'une carte va se tromper moins souvent qu'une application malveillante qui fait des essais pour découvrir le code secret.

L'invention propose, d'utiliser un compteur de ratification de second ordre CP2. Cela consiste à ne plus compter le nombre de fois que l'on a présenté un code mauvais, mais le nombre de fois où la valeur du premier compteur CP1 est proche de la valeur qui va provoquer un blocage du fonctionnement.

De façon pratique, le premier compteur CP1 est incrémenté chaque fois que le code présenté est mauvais, qu'il s'agisse d'une présentation faite par le titulaire de la carte ou par une application malveillante. La valeur maximale de ce compteur est par exemple de trois (trois essais possibles). Si le code secret correct est entré lors de ces trois essais ce compteur CP1 est remis à zéro. Lorsque ce compteur a une valeur proche de la valeur maximale, c'est à dire deux dans cet exemple, le deuxième compteur CP2 est incrémenté.

On compte ainsi avec le deuxième compteur chaque fois que le premier compteur de ratification passe à 2 (si la valeur de blocage est par exemple 3). Ce deuxième compteur n'est pas remis à zéro et lorsque sa valeur atteint une valeur de seuil prédéterminée N', le système bloque le fonctionnement de la carte.

Le seuil fixé pour ce deuxième compteur peut être choisi en fonction de la longueur du code secret. Plus le code est long plus les utilisateurs auront tendance à se tromper en le tapant, on choisira dans ce cas une valeur de seuil plus importante que dans le cas où le code est court (4 chiffres par exemple).

La deuxième solution proposée et illustrée par le schéma de la figure 3 consiste à prévoir un compteur de ratification par application CP1 pour A1, CP2 pour A2, ..., CPn pour An ( pour n applications). Le code secret reste global, c'est-à-dire qu'il est le même pour toutes les applications, mais à chaque application est associé un compteur.

Le compteur relatif à une application va par conséquent s'incrémenter chaque fois qu'un mauvais code secret est entré. Lorsque le bon code secret est entré le compteur de l'application est remis à zéro. Lorsque la valeur du compteur atteint une valeur maximale (par exemple 3) le fonctionnement de la carte ou de l'application est bloqué. Ce mécanisme est le même pour toutes les applications présentes dans la carte. Lorsqu'une nouvelle application est chargée dans la carte le système d'exploitation associe un compteur à cette nouvelle application.

Chaque application est reconnue par le système d'exploitation grâce au champ identification AID (Applet Identifier).

A chaque identification d'application, le système d'exploitation associe le compteur de ratification correspondant et l'incrémente pour chaque mauvaise présentation de code secret. Dans le cas d'une application malveillante n'ayant pas d'accès vers l'extérieur effectuant des essais infructueux de code secret, c'est cette dernière qui fournit le code.

Pour les autres applications, c'est l'utilisateur de la carte qui entre son code sur le clavier du terminal.

Ainsi une application malveillante ne pourra pas présenter plus de trois fois un mauvais code secret(si le compteur est fixé à trois).

## Revendications

1. Procédé de protection contre le vol du code secret pour cartes à puce(s) multi applications (A1, A2,...,An), consistant à détecter des opérations de vérification du code secret par une ou des applications ne possédant pas d'accès vers l'extérieur de la carte et à bloquer le fonctionnement de ladite carte ou de la ou desdites applications lorsque le nombre d'opérations détectées a atteint une valeur de seuil prédéterminée, ledit procédé consistant à utiliser pour ladite détection d'opération de vérification du code secret deux compteurs de ratification (CP1, CP2), un premier compteur (CP1) pour comptabiliser les essais infructueux ledit compteur étant remis à zéro lorsque le titulaire présente un code secret correct avant d'avoir atteint un nombre maximal prédéterminé de présentations possibles, le fonctionnement de la carte étant bloqué dans le cas contraire, ledit procédé étant **caractérisé en ce qu'**il consiste à incrémenter un deuxième compteur (CP2) à chaque fois que le premier compteur (CP1) s'approche dudit nombre maximal prédéterminé et à bloquer le fonctionnement de la carte lorsque la valeur de ce deuxième compteur atteint une valeur de seuil prédéterminée.

2. Procédé contre le vol du code secret selon la revendication 1, **caractérisé en ce qu'**il consiste à utiliser un compteur de ratification (CP1, CP2) par application (A1, A2, ..., An), chaque compteur (CP1, CP2) étant apte à comptabiliser les essais infructueux de code secret relatifs à chaque application (A1, A2,..., An) susceptible d'être mise en oeuvre par la carte, le blocage du fonctionnement de la carte étant provoqué dés que l'un des compteurs (CP1, CP2) a atteint une valeur de seuil prédéterminée pour ledit compteur.

3. Carte à puce multi applications comportant des moyens de détection d'opérations de vérification du code secret pour une application (A1, A2, ..., An) ne possédant pas d'accès vers l'extérieur et des moyens de blocage do son fonctionnement lorsque le nombre d'opérations de vérification a atteint une valeur de seuil prédéterminée, lesdits moyens de détection d'opérations de vérification du code secret comprenant au moins deux compteurs (CP1, CP2) de ratification pour le comptage d'essais infructueux de code secret, le premier compteur (CP1) étant apte à comptabiliser les essais infructueux ledit compteur (CP1) étant remis à zéro lorsque le titulaire présente un code secret correct avant d'avoir atteint un nombre maximal prédéterminé de présentations possibles, le fonctionnement de la carte étant bloqué dans le cas contraire, et **caractérisé en ce que** le deuxième compteur (CP2) est incrémenté à chaque fois que le premier compteur (CP1) s'approche de la valeur maximale et qui est utilisé par les moyens de blocage pour bloquer le fonctionnement de la carte lorsque la valeur de ce compteur (CP2) atteint une valeur maximale prédéterminée.

## Patentansprüche

1. Schutzverfahren gegen den Diebstahl des Geheimcodes für Multiapplikations-Chipkarten (A1, A2, ..., An), das darin besteht, Prüfoperationen des Geheimcodes durch eine oder mehrere Applikationen, die keinen Zugang außerhalb der Karte besitzen, zu erfassen, und die Funktion der besagten Karte oder der besagten Applikation(en) zu sperren, wenn die Anzahl der erfassten Operationen einen vorgegebenen Grenzwert erreicht, wobei das besagte Verfahren darin besteht, für die besagte Erfassung von Prüfoperationen für den Geheimcode zwei Ratifikationszähler (CP1, CP2) zu verwenden, wobei ein erster, die misslungenen Versuche berechnende Zähler (CP1) auf Null zurückgesetzt wird, wenn der Inhaber einen korrekten Geheimcode präsentiert bevor eine maximale vorgegebene Anzahl von möglichen Präsentationen erreicht wurde, wobei die Funktion der Karte im gegenteiligen Fall gesperrt wird, wobei das besagte Verfahren **dadurch gekennzeichnet ist, dass** es darin besteht, einen zweiten Zähler (CP2) jedes Mal zu inkrementieren, wenn sich der erste Zähler (CP1) der besagten maximalen vorgegebenen Anzahl nähert, und die Funktion der Karte zu sperren, wenn der Wert dieses zweiten Zählers einen vorgegebenen Grenzwert erreicht.

2. Verfahren gegen den Diebstahl des Geheimcodes nach Anspruch 1, **dadurch gekennzeichnet, dass** es darin besteht, einen Ratifikationszähler (CP1, CP2) pro Applikation (A1, A2, ..., An) zu verwenden, wobei jeder Zähler (CP1, CP1) geeignet ist, die misslungenen Geheimcode-Versuche bezüglich jeder von der Karte umsetzbaren Applikation (A1, A2, ..., An) zu berechnen, wobei das Sperren der Funktion der Karte veranlasst wird, sobald einer der Zähler (CP1, CP2) einen für den besagten Zähler vorgegebenen Grenzwert erreicht.

3. Multiapplikations-Chipkarte mit Erfassungsmitteln von Prüfoperationen des Geheimcodes für eine Applikation (A1, A2, ..., An), die keinen Zugang außerhalb der Karte besitzen, und Sperrmitteln für ihre Funktion, wenn die Anzahl der Prüfoperationen einen vorgegebenen Grenzwert erreicht hat, wobei die Erfassungsmittel von Prüfoperationen des Geheimcodes mindestens zwei Ratifikationszähler (CP1, CP) für das Berechnen von misslungenen Geheimcodeversuchen umfasst, wobei der erste Zähler (CP1) geeignet ist, die misslungenen Versuche zu berechnen, wobei der besagte Zähler (CP1) auf Null zurückgesetzt wird, wenn der Inhaber einen korrekten Geheimcode präsentiert bevor eine maximale vorgegebene Anzahl von möglichen Präsentationen erreicht wurde, und **dadurch gekennzeichnet ist, dass** der zweite Zähler (CP2) jedes Mal inkrementiert wird, wenn sich der erste Zähler (CP1) dem maximalen Wert nähert, und von den Sperrmitteln dazu benutzt wird, die Funktion der Karte zu sperren, wenn der Wert dieses Zählers (CP2) einen vorgegebenen maximalen Wert erreicht.

## Claims

1. A method of protecting against the theft of the secret code for multi-application chip cards (A1, A2, ..., An), consisting of detecting operations of verification of the secret code by one or more applications not having access to the outside of the card and blocking the functioning of the said card or of the said application or applications when the number of operations detected has reached a predetermined threshold value, said method consisting of using, for the said detection of operations of verifying the secret code, two ratification counters (CP1, CP2), a first counter (CP1) for counting fruitless attempts, the said counter being reset to zero when the holder presents a correct secret code before having reached a predetermined maximum number of possible presentations, the functioning of the card being blocked in the contrary case, the said method being **characterised in that** it consists of incrementing a second counter (CP2) whenever the first counter (CP1) approaches the said predetermined maximum number and blocking the functioning of the card when the value of this second counter reaches a predetermined threshold value.

2. A method against theft of the secret code according to Claim 1, **characterised in that** it consists of using a ratification counter (CP1, CP2) by application (A1, A2, ..., An), each counter (CP1, CP2) being able to count the fruitless secret code attempts related to each application (A1, A2, ..., An) able to be used by the card, the blocking of the functioning of the card being caused as soon as one of the counters (CP1, CP2) has reached a predetermined threshold value for the said counter.

3. A multi-application chip card comprising means of detecting operations of verifying the secret code for an application (A1, A2, ..., An) not having access to the outside and means of blocking its functioning when the number of verification operations has reached a predetermined threshold value, the said means of detecting operations of verifying the secret code comprising at least two ratification counters (CP1, CP2) for counting fruitless secret code attempts, the first counter (CP1) being able to count the fruitless attempts, the said counter (CP1) being reset to zero when the holder presents a correct secret code before having reached a predetermined maximum number of possible presentations, the functioning of the card being blocked in the contrary case, and **characterised in that** the second counter (CP2) is incremented whenever the first counter (CP1) approaches the maximum value and which is used by the blocking means for blocking the functioning of the card when the value of this counter (CP2) reaches a predetermined maximum value.
